Europäisches Patentamt

European Patent Office

Office européen des brevets

(11) Publication number: **0 342 970**
**A2**

# (12) EUROPEAN PATENT APPLICATION

(21) Application number: **89305013.8**

(22) Date of filing: **17.05.89**

(51) Int. Cl.⁴: **G 01 L 5/13**

(30) Priority: **19.05.88 CA 567277**

(43) Date of publication of application:
**23.11.89 Bulletin 89/47**

(84) Designated Contracting States: **DE FR GB SE**

(71) Applicant: **CONTROL DATA CANADA LIMITED**
**P.O. Box 8508**
**Ottawa Ontario K1G 3M9 (CA)**

(72) Inventor: **Alexander, Russell.I.**
**1254 Major Street**
**Ottawa Ontario K2C 2S2 (CA)**

(74) Representative: **Williams, John Francis et al**
**J.F. Williams & Co 34 Tavistock Street**
**London WC2E 7PB (GB)**

(54) Method & apparatus for real-time measurement of the net thrust of a jet engine.

(57) The invention relates to an apparatus and method for computing in real-time jet engine net thrust, based on the previously known method of calculating gross thrust. Real-time gross and net thrust are essential requirements for the calculation of the in-flight measured drag polar, lift curve, and aircraft specific excess power. From these elements, many other types of aeroperformance measurements are computed and analyzed. This gives an immediate postmaneuver assessment of data quality and maneuver technique, thus increasing the productivity of a flight program.

EP 0 342 970 A2

## Description

## METHOD AND APPARATUS FOR REAL-TIME MEASUREMENT OF THE NET THRUST OF A JET ENGINE

## BACKGROUND OF THE INVENTION

### Field of the invention

The invention relates to a system for analysis and display of in-flight, real-time aeroperformance, and in particular the calculation of in-flight net thrust. Net thrust is required in order to determine drag polar, lift curve, aircraft specific excess power and many other performance indicators.

### Prior Art

Aircraft performance flight test data has usually been calculated and analyzed after the test flight has ended. This postflight analysis often has revealed errors and other inadequacies in the data that were serious enough to require that the flight test be repeated. The capability to calculate and display performance data for ground monitoring while a flight was still in progress significantly improves flight productivity by allowing rapid and accurate real-time evaluation of flight test maneuver techniques and data quality. If the data from a maneuver are judged to be unacceptable, the maneuver can be repeated immediately while flight test conditions are suitable.

In flight test programs to define the performance potential of the forward-swept wing and its related technologies, the need for a real-time performance data analysis capability is especially critical. This real-time capability, coupled with dynamic flight maneuver techniques, also provides a way to assess maneuver dynamic effects and instrumentation system malfunctions. Safety of flight monitoring capability is also improved.

The method of computing accurately engine gross thrust in real time over the entire aircraft operating flight envelope has previously been disclosed. This simplified gross thrust method (SGTM) has been evaluated successfully for a variety of variable exhaust turbojet and turbofan fighter engines. See, for example, Canadian Patents Nos. 967,283, 989,978, 998,770, 998,771 and 1,160,345.

## SUMMARY OF THE INVENTION

The method of the present invention provides a method for determining in real-time the net thrust of a jet engine comprising the steps of:

determining the gross thrust ($F_G$) using the SGTM from calculations of the total pressure at the after-burner entrance ($P_{T6}$), the total pressure at the exhaust nozzle entrance ($P_{T7}$), and the exhaust nozzle throat area ($A_8$);

determining the Mach number of the after-burner entrance flow ($M_6$) using measured after-burner entrance static pressure ($P_{S6}$) and after-burner entrance total pressure ($P_{T6}$), calculated by the SGTM, in accordance with the relationship:

$$M_6 = \sqrt{\frac{2}{k-1}\left[\left(\frac{P_{T6}}{P_{S6}}\right)^{\left(\frac{k-1}{k}\right)} - 1\right]}$$

where k = ratio of specific heats
determining the mass flow rate at the after-burner entrance ($W_6$) from the isentropic flow relationship, using measured fixed after-burner entrance area ($A_6$), measured after-burner entrance static pressure ($P_{S6}$), measured turbine exit total temperature ($T_{T5}$) and after-burner entrance Mach Number ($M_6$):

$$W_6 = \frac{A_6}{g}\sqrt{\frac{k}{R}}\frac{P_{S6}}{\sqrt{T_{T6}}} M_6 \sqrt{1 + \frac{k-1}{2} M_6^2}$$

where $T_{T6} = T_{T5}$
R = gas constant
determining the inlet mass flow rate ($W_1$) from calculations of the mass flow rate at the after-burner entrance ($W_6$) and values for fuel flow rate ($W_f$) and compressor bleed flow rate ($W_{B3}$) estimated from empirical relationships determined during calibration:
$W_1 = W_6 - W_f + W_{B3}$
determining the ram drag ($F_R$) from measurements of the aircraft true velocity ($V_t$) and the calculation of mass flow rate ($W_1$) in accordance with the relationship:

$$F_R = V_t \frac{W_1}{g} \; ; \text{ and}$$

determining the net thrust ($F_N$) from the relationship:

$$F_N = F_G - F_R$$

## BRIEF DESCRIPTION OF THE DRAWINGS

The invention will now be described with reference to the following figures in which:

Figure 1 shows a schematic block diagram of the instrumentation system used in an aircraft whose performance is being monitored;

Figure 2 shows a cross sectional schematic of the aircraft engine showing the engine instrumentation system and sensor locations;

Figure 3 shows schematic cross-sections of the engine at stations 558, 6 and 7 of Figure 2, indicating the location of the engine pressure rakes;

Figure 4 shows diagramatically the input, processing and output components of the monitoring apparatus;

Figure 5 shows the format used for displaying the data;

Figure, 6 shows the steps in the method for calculation of engine gross thrust in real-time;

Figure 7 shows a flow chart of the method for calculation of net thrust;

Figure 8 shows a flow chart of the aircraft performance calculations;

Figure 9 shows a schematic of maneuvers to define a drag polar at a constant Mach number;

Figure 10 shows a graph relating to the accuracy of the simplified net thrust calculation;

Figures 11a, 11b and 11c show examples of real-time aircraft performance data;

Figures 12a and 12b show comparison of in-flight net thrust calculated by three methods for a windup turn and an intermediate rated power (IRP) take off; and.

Figure 13 shows the typical dynamic response of the SNTM computed thrust to changes in engine operating conditions.

## DESCRIPTION OF THE PREFERRED EMBODIMENT

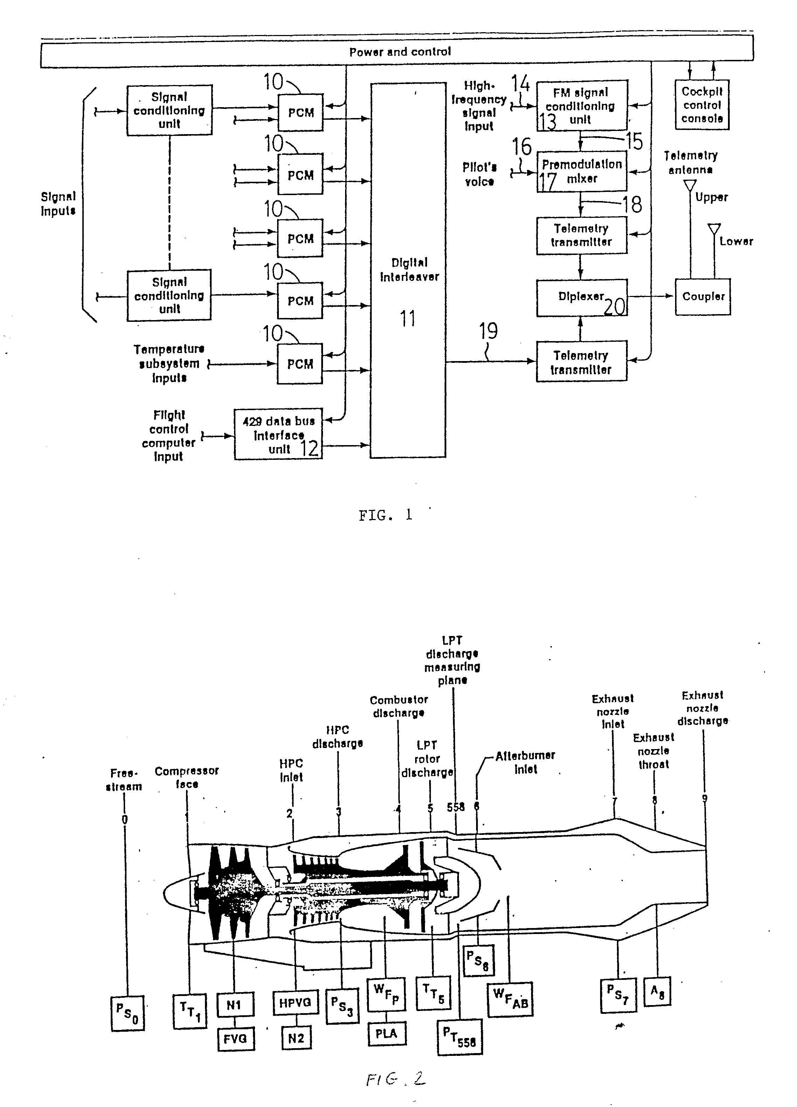

As an example of the use of the invention, the analysis of the aeroperformance of an F404 engine housed in an X-29A single seat aircraft will be described. The X-29A on-board data acquisition system uses both pulse code modulation (PCM) and frequency modulation (FM) for data encoding. A schematic of the instrumentation system can be seen in Figure 1. Because of space constraints, no data is recorded on the aircraft. The 10-bit PCM system sampled data from 25 to 400 samples per sec, depending on the desired frequency range to be covered. The data parameter set includes measurements for structural loads, structural dynamics, flight controls, stability and control, aircraft subsystems, propulsion and performances, wing deflections, buffet, and external pressure distributions. The digital data are processed by five PCM units 10, and an interleaver device 11 merges the data stream along with the output from the flight control computer's bus 12. The constant-bandwidth FM system 13 is installed to process high-response acceleration and vibration data 14. The resulting signal 15 is mixed with the pilot's voice signal 16 by premodulation mixer 17. Mixed FM signal 18 is merged via diplexer 20 with the processed digital data 19 from the interleaver 11 and telemetered to the ground. A total of 691 measured data parameters are telemetered to the ground for recording, real-time analysis, and control room monitoring.

Aircraft instrumentation includes a pitot-static noseboom with angle of attack, $\alpha$, and sideslip angle, $\beta$, vanes. The instrumentation package used for flight performance measurements includes two body-mounted linear accelerometer packages, and a rate gyro package for aircraft pitch, roll, and yaw attitudes, rates, and angular accelerations. One linear accelerometer set, termed the dynamic performance center-of-gravity (c.g.) package, has limited measurement ranges specifically tailored to the pushover-pullup maneuver described below. Its longitudinal and lateral accelerometer ranges are $\pm 0.6$ g and the normal accelerometer range is -1 to +3 g. The other accelerometer set, termed the center-of-gravity accelerometer package, has larger accelerometer ranges varying from $\pm 1$ g for the longitudinal and lateral accelerometers and -3 to +8 g for the normal accelerometer. This covers the higher $\alpha$ range data. Both packages are displaced from the actual aircraft center-of-gravity.

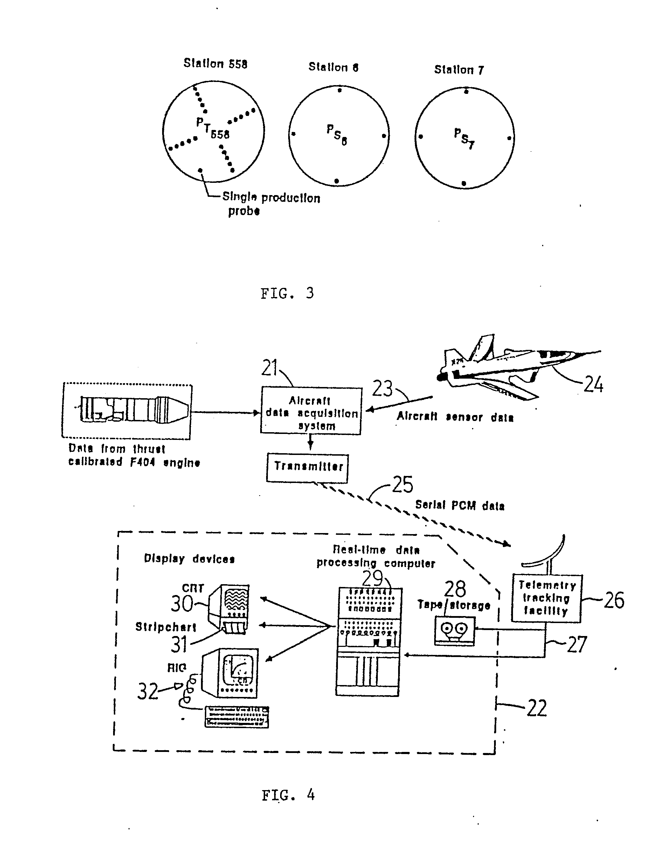

The General Electric F404-GE-400 engine has a complete instrumentation system for monitoring engine operating characteristics, engine trim levels, and for calculating in-flight thrust using the engine manufacturer's thrust program. Measurement locations are shown in Figure 2 and include inlet total temperature, $T_{T1}$, fan and compressor rotor speeds, N1 and N2, combustor static pressure $P_{S3}$, turbine exhaust temperature, $T_{T5}$, nozzle throat area, $A_8$, and a 20-probe rake measurement of turbine exhaust pressure, $P_{T558}$. Volumetric flow meters were used to measure main engine fuel flow, $W_F$, and after-burner pilot and main fuel, $W_{FAB}$.

In order to implement the real-time in-flight thrust method, four flush-mounted static pressure taps were located at both the after-burner entrance, $P_{S6}$, and exhaust nozzle 10 entrance, $P_{S7}$ as shown in Figure 3. This technique also makes use of the engine $P_{T558}$ rake, $T_{T5}$, free stream static air pressure, $P_{S0}$, and true airspeed, $V_t$.

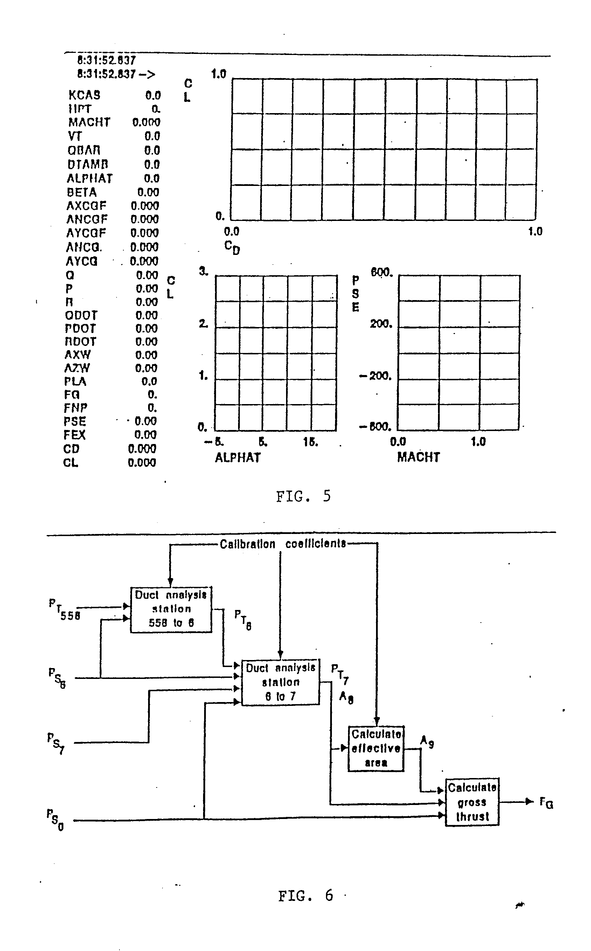

The X-29A real-time performance data system is designed to record data from the aircraft data acquisition system 21, then process and display the information in the mission control room 22. An illustration of this system is shown in Figure 4. Data 23 from the aircraft 24 is transmitted in a serial PCM stream 25 and received by the telemetry tracking facility 26 on the ground. The data stream is then passed along land lines 27 to a mission control center 22 for data storage, processing, and display. The serial data is synchronized and demultiplexed in the mission control center 22. An analog tape recorder 28 is used to store this raw aircraft data for postflight processing. The raw data is also passed to a Gould 32/67 computer system (Gould Inc., Fort Lauderdale, Florida) 29 with dual processing capability for real-time computing and application of engineering-unit calibrations. Processed data from the real-time computer is formatted for display on various devices in the mission control room 22. Display devices include CRT 30, analog stripcharts and gages 31, and a real-time interactive graphics (RIG) system 32.

The RIG system 32 allows an operator to control the display of real-time color graphics during flight test. For the X-29A, the real-time performance system uses the RIG capability to display various performance plots such as the drag ($C_D$ vs $C_L$), the lift curves ($C_L$ vs $\alpha$), and specific excess power ($P_S$, vs Mach number). An example RIG display format is shown in Figure 5. The digital data included aircraft-measured accelerations, calculated body axis accelerations corrected to the c.g., translated wind axis accelerations, and aircraft flight conditions, attitudes and rates. Other displays (not shown) are also developed to monitor engine parameters and performances, including time histories of gross and net thrust, and the pressure rake averages. The thrust displays include digital parameters such as basic engine parameters critical to flight safety, along with engine performance parameters. Logic monitors continually monitor the status of the thrust calculations methods of the invention and displays a coded message when an error occurs, describing the nature of the error.

The RIG system 32 stores a number of predefined display formats that can be selected by the operator as required. Graphic parameters are updated at up to 10 samples per second and the column of digital data displayed next to the graphics is updated at one sample per second (see Figure 5). The actual calculation rate of the performance parameters is up to 12.5 samples per second. This RIG operator not only controls which graphic page (format) to display, but also can start, stop, clear, and print the display at any time.

The method of this invention, which in part provides for the calculation of the Real-Time Net Thrust, relates the net thrust, $F_N$, to the gross thrust $F_G$. Calculation of the gross thrust, $F_G$, by the simplified gross thrust method SGTM is based on a one-dimensional analysis of the flow in the engine after-burner and exhaust nozzle.

Figure 6 shows a block diagram of the SGTM algorithm forming part of the method. The algorithm analyzes the flow in the after-burner duct from the turbine exit (station 558) to the exhaust nozzle exit (station 9) and determines first the total pressure at the after-burner entrance, $P_{T6}$, and then at the exhaust nozzle entrance, $P_{T7}$. The exhaust nozzle throat area, $A_8$, is also computed. Gross thrust is then computed from the calculated value of $P_{T7}$ and $A_8$ and measured nozzle static pressure. The SGTM also computes exhaust nozzle exit area, $A_9$, by applying computed $A_8$ and the mechanical $A_9/A_8$ schedule.

Calibration coefficients for the F404 engine may be determined using data obtained during testing. Pressure and thrust data are collected from 131 data points at 11 combinations of Mach number and altitude over the range of engine power settings from near flight idle to maximum after-burning. The coefficients are applied to the equations to correct for the effects of internal friction, mass transfer (leakages), three-dimensional effects, and the effect of the simplifying assumptions used in the theory. Calibration coefficients obtained through calibration of the individual engine provide good accuracy for all engines of the same model.

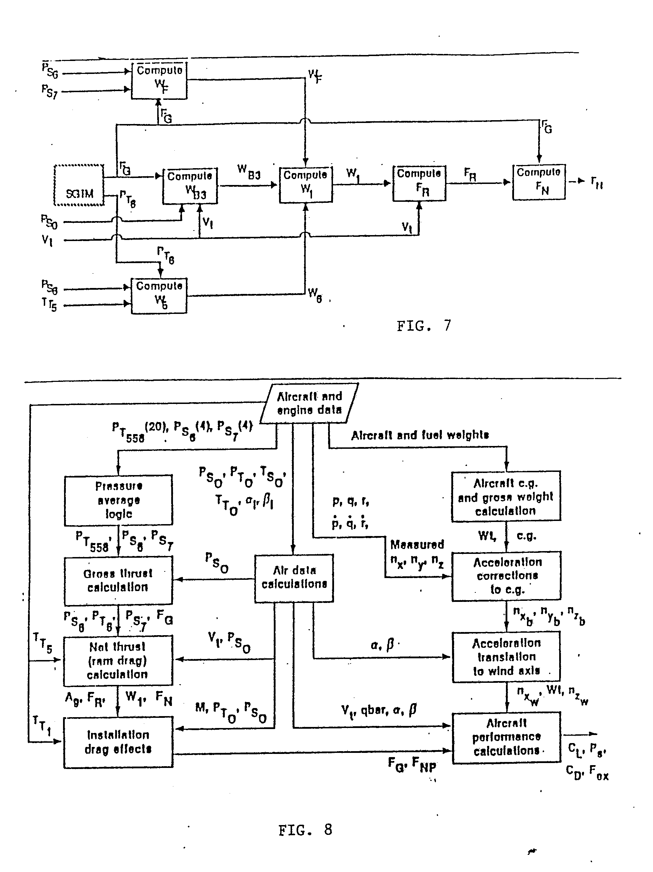

The method and apparatus of the invention employ an accurate and fast net thrust algorithm for the F404 engine. A block diagram of the simplified net thrust method (SNTM) is shown in Figure 7. The SNTM uses the same $P_{S6}$ and $P_{S7}$ pressure measurements as the SGTM and also uses the production $T_{T5}$ measurement and true aircraft velocity, $V_t$. No additional instrumentation is required to compute net thrust using the SNTM.

Net thrust, $F_N$, is defined as gross thrust, $F_G$, minus inlet airflow momentum or ram drag, $F_R$.

$$F_N = F_G - F_R$$

Ram drag is defined as the product of true velocity, $V_t$, and mass flow rate, $W_1$.

$$F_R = V_t W_1/g$$

The SGTM calculates $F_G$ and $P_{T6}$. The SNTM calculates $W_1$ and obtains $V_t$ from the aircraft air data system to determine ram drag and thus net thrust.

Inlet mass flow, $W_1$, is determined by calculating the mass flow rate at the after-burner entrance (station 6), $W_6$, using flow parameters, $P_{T6}$, determined in the SGTM algorithm and the turbine discharge total temperature, $T_{T5}$, and the pressure at the after-burner entrance, $P_{S6}$ measured by existing engine instrumentation. This mass flow rate, $W_6$, is used to compute the inlet mass flow rate, $W_1$, after accounting for compressor bleed air extraction, $W_{B3}$, and fuel mass addition, $W_F$, using an empirical model calibrated with test data. The inlet mass flow is thus computed by

$$W_1 = W_6 - W_F + W_{B3}$$

The SNTM calculates engine station 6 local Mach number, $M_6$, and mass flow rate, $W_6$, using measured $T_{T5}$ and $P_{S6}$, and calculated $P_{T6}$. Total temperature at station 6, $T_{T6}$, is assumed to equal $T_{T5}$. A simplified main engine fuel flow, $W_F$, in comparison to calculated inlet airflow relationship, was derived empirically.

A constant bleed air extraction, $W_{B3}$, was assumed based on aircraft system cooling air requirements. Over the aircraft operating envelope, the flows $W_F$ and $W_{B3}$ are much smaller than $W_6$ (typically less than 2 percent of $W_6$). Therefore, errors in their determination have only secondary effects on $W_1$ accuracy. The accuracy of the production engine mounted $T_{T5}$ measuring system is adequate because the sensitivity of computed net thrust to $T_{T5}$ errors is small. A 10°F error in $T_{T5}$, for example, produces an error of only 0.03 percent in net thrust at intermediate rated power (IRP) at Mach 0.9, 30,000 ft.

The SNTM was calibrated against data obtained independently over the X-29A Mach, altitude, and power setting envelopes. Calibration coefficients were applied to correct for the effects of the simplifying assumptions in the net thrust calculation. Because the mass flow, $W_6$, is calculated in the engine after-burner section, where the gas flow is well mixed, inlet flow, $W_1$, distortion effects are minimized.

Using the accelerometer data inputs, the drag polar analysis technique included body-axis accelerometer angular rate and acceleration corrections to the aircraft, e.g. accelerometer data were transformed to the aircraft wind axis or flight path system by angular transformations through $\alpha$ and $\beta$. Thrust installation corrections included estimated nozzle drag, $D_{NOZ}$, and spillage drag, $D_{SPIL}$.

Aircraft coefficients of lift ($C_L$) and drag ($C_D$) were computed from the accelerometer method using the equations

$$C_D = \frac{D}{qbar\ S} = \frac{F_{NP} - F_{ex}}{qbar\ S}$$

$$C_L = \frac{L}{qbar\ S} = \frac{n_z\ Wt - F_G\ \sin\ \alpha}{qbar\ S}$$

where
$F_{ex} = n_x\ Wt$
$F_{NP} = F_N - (D_{SPIL} + D_{NOZ})$
Aircraft specific excess power, $P_S$, was computed from the accelerometer data as follows:
$P_S = F_{ex}\ V_t/Wt$

The input data to the real-time performance program is not filtered (except for an on-board, anti-aliasing filter for acceleration parameters), nor are trim drag corrections applied to the drag results. The real-time display values are neither smoothed nor thinned (below the 10 samples per sec update rate of the RIG system), and wild points are neither edited nor removed. This allows the fastest calculation rate possible in real-time and the ability to evaluate data quality without the extra data massaging. The time lag between the actual flight event and the display of calculated performance data on the RIG is estimated to be under 0.25 sec. The abovementioned data reduction techniques are a part of the post-flight processing.

Real-time software implements the aircraft and engine performance analysis techniques. Figure 8 summarizes the performance calculations in a flow diagram. The X-29A air-data software was used to obtain $\alpha$ and $\beta$ and Mach number, M. Indicated angle of attack, $\alpha_1$, was corrected for upwash errors, misalignment errors, pitch rate effects, boom bending, and fuselage bending effects. Mach number was computed from nose boom pitot static measurements.

A pressure averaging routine has been developed to process engine pressure rake data. The average pressure of each rake is calculated using all the available probes. A comparison is then made between each individual probe and the average pressure. Those probes outside of a specified tolerance of the average are assumed bad and eliminated. A new average rake pressure is then calculated. If all the probe values of one rake are outside the specified tolerance, the highest and lowest probe values are eliminated, the rake average is calculated again, and the tolerance check is repeated. This technique yields high-quality pressure data, even in the event of damaged pressure lines, faulty transducers, or data transmission problems. This routine also expedited the implementation, checkout and trouble-shooting of the engine pressure rake instrumentation system.

Dynamic flight test techniques were used to define quickly and accurately the aircraft drag polar and lift curve characteristics at a given Mach number over a wide range of $\alpha$. These maneuver techniques rely on accelerometer methods using body-mounted accelerometer packages to measure aircraft accelerations along the normal to the flight path.

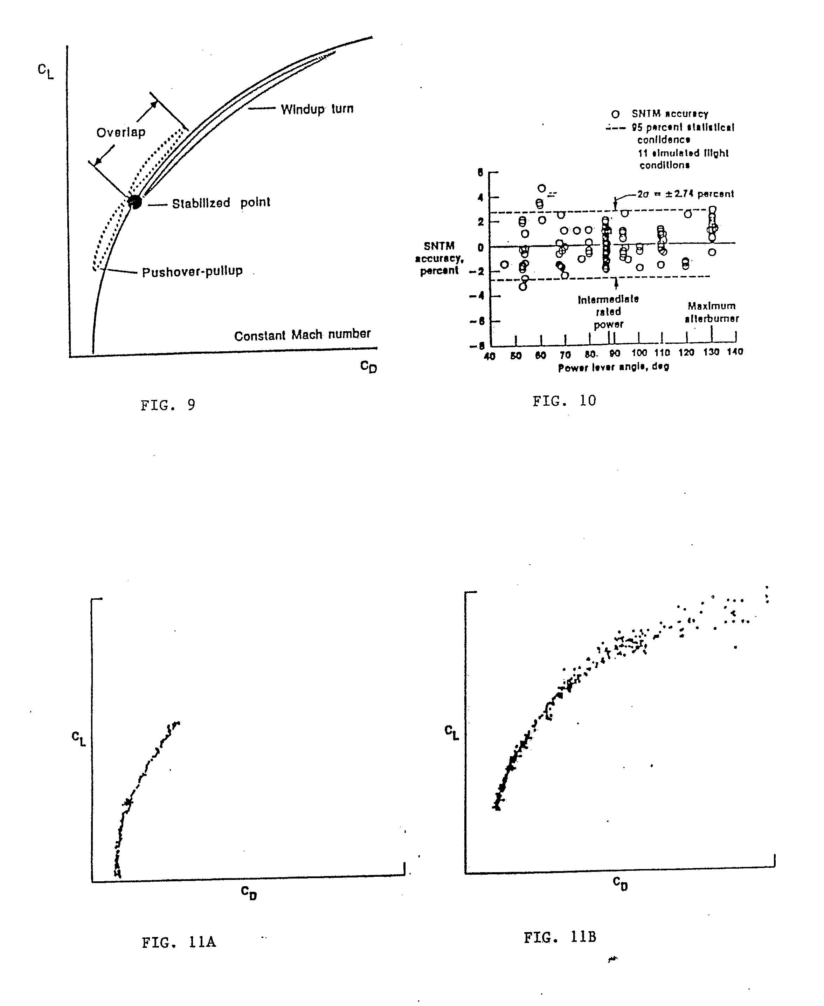

Two dynamic maneuvers, the pushover-pullup and the windup turn, were used on the X-29A to define complete drag polar curves. Both maneuvers were preceded by 30-sec stabilized trim points. The pushover-pullup was used to obtain the mid- to low-range of $\alpha$. The maneuver test technique consisted of a pushover from the 1-g normal load factor, $n_z$, at the stabilized flight condition to zero g's at a nominal g-onset rate of -0.2 g's per sec. At the zero-g point, the aircraft was pulled up at a 0.2 g's per sec onset rate to 2 g's and then returned to the 1-g level flight condition. Altitude and Mach number excursions were kept to a minimum while power lever angle (PLA) was held constant. The windup turn maneuver was used to obtain data from the mid- to high-range of $\alpha$. Using the same g-onset rate as for the pushover-pullup maneuver, the windup turn was flown at a fixed power setting with the aircraft descending, trading altitude for airspeed in order to hold a constant Mach number as the normal load factor and $\alpha$ were increased to the aim conditions. For a given Mach number, the maneuvers produced flight data that overlapped in coefficient of lift between 1 and 2 g's, giving a full polar shape over $\alpha$ and assuring good data correlation between the maneuvers. Figure 9 gives a schematic drag polar representation of the maneuvers' sweep of the $\alpha$ variation of a polar at a constant Mach number.

An analysis was conducted to determine the accuracy of the real-time performance values as affected by the net thrust calculation. The net thrust values calculated by the SNTM method were compared to measured values obtained independently. The percent error in SNTM, expressed as a percentage of measured net thrust, is plotted against PLA in Figure 10. The bias error, over the 131 test points at 11 simulated flight conditions, was zero percent and the 95 percent statistical confidence limit (two standard deviations, $2\sigma$) was $\pm2.74$ percent. This spread includes contributions from all the input measurement errors and the SNTM net thrust model error determined from Lewis PSL data.

A sensitivity analysis was conducted to determine the expected in-flight uncertainty of the SNTM. Net thrust uncertainty was calculated by combining the model error and the individual errors due to the error in each input measurement (see Figure 7) by the method of root-sum-squares. Table 1 shows the in-flight total uncertainties of SNTM net thrust for six Mach number and altitude conditions at three power settings. The uncertainty at IRP (PLA = 87°) ranges from $\pm2.41$ percent at Mach 0.8, 10,000 ft to $\pm4.39$ percent at Mach 0.8, 40,000 ft. At Mach 0.9, 30,000 ft design point, the total uncertainty of the SNTM at IRP is $\pm3.15$ percent, and, at maximum after-burning, it is $\pm2.75$ percent.

TABLE 1

ESTIMATED IN-FLIGHT UNCERTAINTY OF THE SIMPLIFIED GROSS AND NET THRUST METHODS

| Mach | Altitude, ft | PLA, deg | Uncertainty | |
|---|---|---|---|---|
| | | | SGTM, % | SGTM, % |
| 0.4 | 10,000 | 70 | 2.35 | 3.61 |
| | | 87 | 1.36 | 2.41 |
| | | 130 | 0.99 | 2.10 |
| 0.8 | 10,000 | 70 | 2.52 | 3.61 |
| | | 87 | 1.32 | 2.41 |
| | | 130 | 1.06 | 2.10 |
| 0.9 | 30,000 | 70 | 2.61 | 4.25 |
| | | 87 | 1.48 | 3.15 |
| | | 130 | 1.05 | 2.75 |
| 1.2 | 30,000 | 70 | 1.28 | 2.69 |
| | | 87 | 1.36 | 2.69 |
| | | 130 | 1.0545 | 2.72 |
| 0.8 | 40,000 | 70 | 2.55 | 3.65 |
| | | 87 | 1.82 | 4.39 |
| | | 130 | 1.09 | 2.86 |
| 1.6 | 40,000 | 70 | 1.36 | 2.81 |
| | | 87 | 1.36 | 2.81 |
| | | 130 | 1.04 | 2.74 |

These results verify that highly accurate net thrust values have been calculated in real-time on the X-29A aircraft. Based on these results, the uncertainty in the real-time $C_D$ value due to the uncertainty in net thrust is estimated to be about $\pm3.0$ percent. The effects of $\alpha$ uncertainty on $C_L$ and $C_D$ can also be substantial.

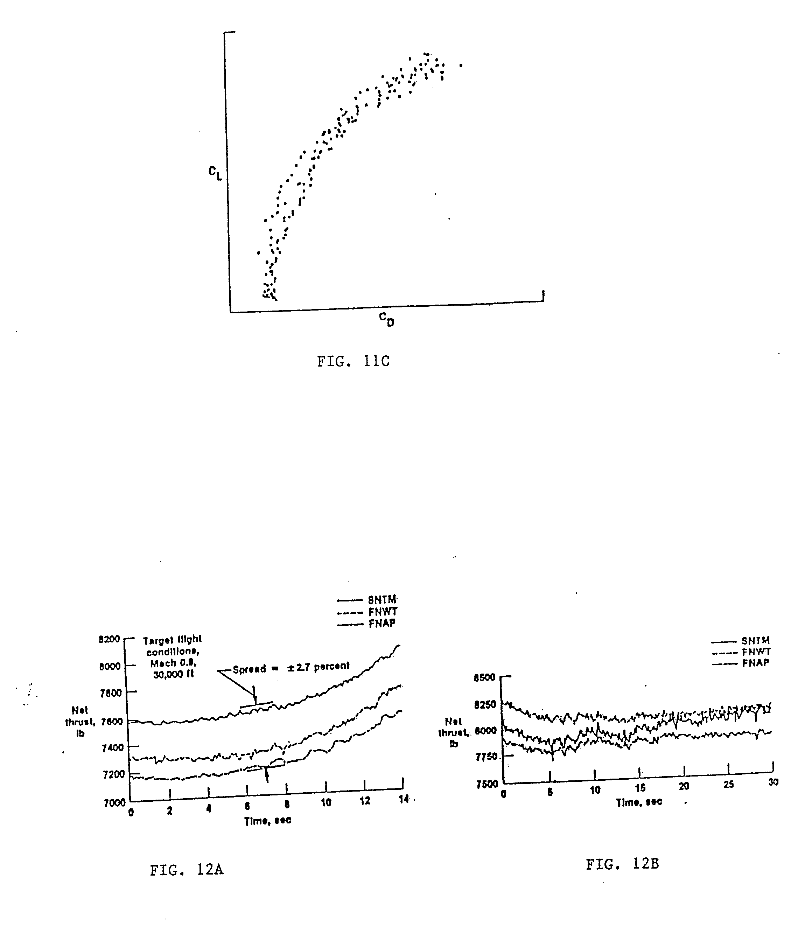

The use of real-time performance calculations allowed an immediate assessment of data quality and maneuver technique. Figure 11 shows typical drag polars obtained during various performance maneuvers. The pushover-pullup maneuver (Figure 11a) sweeps out the lower $\alpha$ portion of the drag polar while the windup turn maneuver, (Figure 11b) overlaps and completes the higher $\alpha$ section of the curve as discussed. These results illustrate the data quality obtained in real-time during X-29A performance testing. A maneuver that misses the aim flight conditions can be terminated and repeated immediately, greatly increasing productivity and reducing the postflight data processing requirements.

Figure 11c shows an example of a poor quality pushover-pullup maneuver which is evident by the increased data scatter compared to Figure 11a. This data scatter resulted, in part, due to improper aerodynamic surface positions caused by maneuver dynamics. This scatter can occur when the flight control inputs are too abrupt for the flaperons, strake flaps, or canard to follow optimum schedules. Other factors that may affect the performance maneuver quality include buffet, off Mach or altitude conditions, and pilot technique.

The ability to monitor performance data quality and the function of the instrumentation system in real-time proved a very effective diagnostic capability. During the initial checkout of the thrust instrumentation system, the engine pressure averaging logic helped to detect and isolate pressure leaks and transducer failures. The real-time thrust algorithms also helped in the flight safety monitoring of the X-29A'S engine performance during takeoff checks and flight.

To evaluate the in-flight calculation of thrust using the SNTM, comparisons were made to the thrust values calculated by the engine manufacturer's in-flight thrust program. This postflight program computes net thrust by two methods: the area-pressure method, $F_{NAP}$, and the mass flow method, $F_{NWT}$. These two methods were also calibrated using earlier obtained data.

The three net thrust methods were compared during postflight processing of over 150 performance maneuvers including windup turns, pushover-pullups, level accelerations and decelerations, stabilized level flight, and takeoff. Figure 12 shows some typical results. The three net thrust methods agreed within their expected in-flight uncertainties. For example, Figure 12a shows flight data from a sustained high-g turn at maximum power at Mach 0.9 and 30,000 ft. Net thrust computed by the SNTM and in-flight thrust program fall within a band of ±2.7 percent throughout the maneuver. The thrust increase shown in this figure is due to decreasing altitude and increasing Mach during the maneuver. Flight conditions shown in this figure are target conditions. Figure 12b also shows a comparison of the three thrust methods shortly following an IRP takeoff. The net thrust values show little change during the maneuver because the aircraft is both climbing and accelerating, causing a cancellation effect. Postflight comparisons show the SNTM typically falls between the $F_{NAP}$ and $F_{NWT}$ values as shown in Figure 12b.

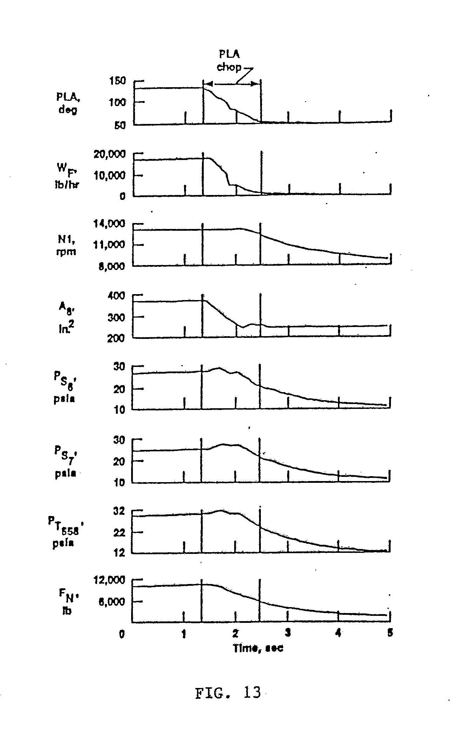

Figure 13 shows the typical dynamic response of the SNTM computed thrust to changes in engine operating conditions. In this example, at Mach 0.7 and 23,000 ft, the power setting was chopped from 130°PLA (Maximum after-burning) to 50 PLA (near flight idle) in about 1 sec. Net thrust is seen to follow closely the change in engine pressures.

The practicality and advantages of a real-time performance analysis technique were demonstrated during flight testing of the X-29A. This technique has enhanced the flight productivity and efficiency of the flight research program. It also helped to assess data quality, instrumentation functionality, and maneuver technique. A key element in the success of the real-time performance technique was the development of the simplified net thrust method. The net thrust algorithm allows for the rapid calculation of aircraft thrust and drag and enhanced the safety of flight monitoring of the propulsion system. Because accurate net thrust values were calculated by the SNTM, the uncertainties in real-time $C_D$ results due to the uncertainty in net thrust were estimated to be about ±3 percent.

Real-time performance analysis provides a major advancement in flight test productivity and efficiency by increasing aircraft diagnostic capabilities related to aircraft performance flight testing, resulting in decreased downtime and postflight data requirements. Results show good agreement with uncertainty predictions and compare favorably to postflight techniques.

Thus, there has been disclosed a method and apparatus for determining a real time measurement of the net thrust of a jet engine. Obvious variations of the disclosed embodiments will be clear to those skilled in the art and are within the scope of the appended claims.

The following page sets out a list of the abbreviations used in this application.

A     area, ft²
$C_D$     coefficient of drag
$C_L$     coefficient of lift
c.g.     center of gravity
D     aircraft drag, 1b
$D_{NOZ}$     external nozzle drag, 1b
$D_{SPIL}$     inlet spillage drag, 1b
$F_{ex}$     excess thrust, 1b
$F_G$     gross thrust, 1b
FM     frequency modulation
$F_N$     engine net thrust available,
$F_{NP}$     net propulsive force, 1b
$F_R$     ram drag, 1b
FVG     fan variable guide vanes
HPVG     high-pressure compressor variable guide vanes
IRP     intermediate rated power (83 < PLA < 87 deg)
k     ratio of specific heats
L     aircraft lift, 1b
M     Mach number
$n_x$     aircraft longitudinal acceleration, g
$n_y$     aircraft lateral acceleration, g
$n_z$     aircraft normal acceleration, g
N1     fan rotor speed, rpm
N2     compressor rotor speed, rpm
P     pressure, psi
p     roll rate, deg/sec
p     roll acceleration rate, deg/sec²
$P_S$     specific excess power, ft/sec
PLA     power lever angle, deg
PCM     pulse code modulation
qbar     dynamic pressure, psi
q     pitch rate, deg/sec
R     gas constant

$\dot{q}$   pitch acceleration, deg/sec$^2$

$\dot{r}$   yaw rate, deg/sec

$r$   yaw acceleration rate, deg/sec$^2$

RIG   real-time interactive graphics system

S   reference wing area, ft$^2$

SGTM   simplified gross thrust method

SNTM   simplified net thrust method

T   temperature, °C

$V_t$   true airspeed, ft/sec

W   mass flow rate, 1b/sec

Wt   aircraft gross weight, 1b

$\alpha$   angle of attack, deg

$\sigma$   standard deviation, percent

$\beta$   angle of sideslip, deg


Subscripts

AB   after-burner

AP   area-pressure thrust method

b   body axis

B3   engine compressure bleed air

P   primary

F   fuel

i   indicated

S   static

T   total

W   wind axis

WT   mass-flow thrust method


Engine Stations

0   free stream

1   engine inlet

3   compressor exit

5   turbine rotor discharge

558   turbine exhaust exit

6   after-burner inlet

7   exhaust nozzle inlet

8   exhaust nozzle throat

9   exhaust nozzle exit


**Claims**

1. A method for determining in real-time the net thrust of a jet engine comprising the steps of:

determining the gross thrust ($F_G$) from calculations of the total pressure at the after-burner entrance ($P_{T6}$), the total pressure at the exhaust nozzle entrance ($P_{T7}$), and the exhaust nozzle throat area ($A_8$);

determining the Mach number of the after-burner entrance flow ($M_6$) using measured after-burner entrance static pressure ($P_{S6}$) and after-burner entrance total pressure ($P_{T6}$), in accordance with the relationship:

$$M_6 = \sqrt{\frac{2}{k-1}\left[\left(\frac{P_{T6}}{P_{S6}}\right)^{\left(\frac{k-1}{k}\right)} - 1\right]}$$

determining the mass flow rate at the after-burner entrance ($W_6$) from the isentropic flow relationship, using measured fixed after-burner entrance area ($A_6$), measured after-burner entrance static pressure ($P_{S6}$), measured turbine exit total temperature ($T_{T5}$) and after-burner entrance Mach Number ($M_6$):

$$W_6 = \frac{A_6}{g}\sqrt{\frac{k}{R}}\frac{P_{S6}}{\sqrt{T_{T6}}}M_6\sqrt{1 + \frac{k-1}{2}M_6^2}$$

determining the inlet mass flow rate ($W_1$) from calculations of the mass flow rate at the after-burner entrance ($W_6$) and values for fuel flow rate ($W_f$) and compressor bleed flow rate ($W_{B3}$) estimated from empirical relationships determined during calibration: $W_1 = W_6 - W_f + W_{B3}$
determining the ram drag ($F_R$) from measurements of the true velocity ($V_t$) and the calculation of mass flow rate ($W_1$) in accordance with the relationship:

$$F_R = V_t \frac{W_1}{g} \; ; \text{ and}$$

determining the net thrust ($F_N$) from the relationship:
$F_N = F_G - F_R$

2. Apparatus for determining in real-time the net thrust of a jet engine comprising:
means determining the gross thrust ($F_G$) from calculations of the total pressure at the after-burner entrance ($P_{T6}$) the pressure at the exhaust nozzle entrance ($P_{T7}$) and the exhaust nozzle throat area ($A_8$);
means determining the Mach number of the after-burner entrance flow ($M_6$) using measured after-burner entrance static pressure ($P_{S6}$) and after-burner entrance total pressure ($P_{T6}$), in accordance with the relationship:

$$M_6 = \sqrt{\frac{2}{k-1} \left[ \left(\frac{P_{T6}}{P_{S6}}\right)^{\left(\frac{k-1}{k}\right)} - 1 \right]}$$

means determining the mass flow rate at the after-burner entrance ($W_6$) from the isentropic flow relationship, using measured fixed after-burner entrance area ($A_6$), measured after-burner entrance static pressure ($P_{S6}$), measured turbine exit total temperature ($T_{T5}$) and after-burner entrance Mach Number ($M_6$):

$$W_6 = \frac{A_6}{g} \sqrt{\frac{k}{R}} \frac{P_{S6}}{\sqrt{T_{T6}}} M_6 \sqrt{1 + \frac{k-1}{2} M_6^2}$$

means determining the inlet mass flow rate ($W_1$) from calculations of the mass flow rate at the after-burner entrance ($W_6$) and values for fuel flow rate ($W_f$) and compressor bleed flow rate ($W_{B3}$) estimated from empirical relationships determined during claibration:
$W_1 = W_6 - W_f + W_{B3}$
means calculating the ram drag ($F_R$) from measurements of the true velocity ($V_t$) and the calculation of mass flow rate ($W_1$) in accordance with the relationship:

$$F_R = V_t \frac{W_1}{g} \; ; \text{ and}$$

means calculating the net thrust ($F_N$) from the relationship:
$F_N = F_G - F_R$.

3. A method for determining in real-time the net thrust of a jet engine comprising the steps of:
measuring the total pressure at the after-burner entrance ($P_{16}$), the total pressure at the exhaust nozzle entrance ($P_{17}$), and the exhaust nozzle throat area ($A_8$), and determining the gross thrust ($F_G$) therefrom;measuring the after-burner entrance static pressure ($P_{S6}$) and after-burner entrance total pressure ($P_{16}$), and determining the Mach number of the after-burner entrance flow ($M_6$) in accordance with the relationship;

$$M_6 = \sqrt{\frac{2}{k-1} \left[ \left(\frac{P_{16}}{P_{S6}}\right)^{\left(\frac{k-1}{k}\right)} - 1 \right]}$$

measuring the fixed after-burner entrance area ($A_6$), the after-burner entrance static pressure ($P_{S6}$), the turbine exit total temperature ($T_{15}$) and determining the mass flow rate at the after-burner entrance ($W_6$) from the isentropic flow relationship

$$W_6 = \frac{A_6}{g} \sqrt{\frac{k}{R}} \frac{P_{S6}}{\sqrt{T_{T6}}} M_6 \sqrt{1 + \frac{k-1}{2} M_6^2}$$

determining the inlet mass flow rate ($W_1$) from calculations of the mass flow rate at the after-burner entrance ($W_6$) and values for fuel flow rate ($W_1$) and compressor bleed flow rate ($W_{B3}$) estimated from empirical relationships determined during calibration:
$W_1 = W_6 - W_f + W_{B3}$,
measuring the true velocity ($V_t$) and determining the ram drag ($F_R$) in accordance with the relationship:

$$F_R = V_t \frac{W_1}{g} \; ; \text{ and}$$

9

determining the net thrust ($F_N$) from the relationship:
$F_N = F_G - F_R$

FIG. 1

FIG. 2

Station 558     Station 6     Station 7

$P_{T_{558}}$     $P_{S_6}$     $P_{S_7}$

Single production probe

FIG. 3

Data from thrust calibrated F404 engine

Aircraft data acquisition system 21

23 Aircraft sensor data 24

Transmitter

25 Serial PCM data

Display devices

Real-time data processing computer 29

Tape/storage 28

CRT 30

Stripchart 31

RIG 32

Telemetry tracking facility 26

27

22

FIG. 4

FIG. 5

FIG. 6

FIG. 7

FIG. 8

FIG. 9

FIG. 10

FIG. 11A

FIG. 11B

FIG. 11C

FIG. 12A

FIG. 12B

FIG. 13